# EUROPÄISCHE PATENTSCHRIFT

(11) **EP 0 360 902 B1**
(45) Veröffentlichungstag und Bekanntmachung des Hinweises auf die Patenterteilung: **18.08.1993**
(21) Anmeldenummer: 88116072.5
(22) Anmeldetag: 29.09.1988
(51) Int. Cl.: B60R 22/46

(54) **Antriebsvorrichtung für Rückhaltesysteme in Kraftfahrzeugen**
Propulsive Device for restraint systems in motor vehicles
Dispositif propulsif pour des systèmes de retention dans des véhicules automobiles

(43) Veröffentlichungstag der Anmeldung: 04.04.1990
(73) Patentinhaber: TRW REPA GMBH, 73553 Alfdorf (DE)
(72) Erfinder: Föhl, Artur, D-7060 Schorndorf (DE)
(74) Vertreter: Degwert, Hartmut, Dipl.-Phys.

(56) Entgegenhaltungen:
- WO-A-87/01664
- DE-A- 3 131 637

## Beschreibung

Die Erfindung betrifft eine Antriebsvorrichtung für Rückhaltesysteme in Fahrzeugen, mit einem pyrotechnischen Gasgenerator, dessen Gase eine Arbeitskammer beaufschlagen.

Derartige Antriebsvorrichtungen werden beispielsweise bei Sicherheitsgurt-Rückstrammvorrichtungen benötigt, wie sie aus der DE-OS 31 31 637 bekannt sind.

Pyrotechnische Gasgeneratoren sind als Energiequelle für Antriebsvorrichtungen dieser Art besonders geeignet, weil sie imstande sind, innerhalb einer kurzen Zeitspanne von wenigen Millisekunden die benötigen Gasmengen unter extrem hohem Druck zu liefern. Diesen hohen Drücken muß die Arbeitskammer der Vorrichtung, beispielsweise ein Zylinder, in dem ein Kolben gleitet, standhalten. Das im Kraftfahrzeugbau vorherrschende Streben nach Leichtbauweise zur Gewichts- und Materialeinsparung findet hier seine Grenze an den Mindestanforderungen für die mechanische Festigkeit der Vorrichtung.

Noch höhere Anforderungen an die mechanische Festigkeit entstehen dadurch, daß eine Gefährdung durch berstende oder herumfliegende Teile auch bei einer Selbstentzündung des Gasgenerators aufgrund einer außergewöhnlichen Erhitzung, insbesondere bei einem Brand des Kraftfahrzeugs, ausgeschlossen werden soll. Die von einem Gasgenerator freigesetzte Energie ist nämlich bei Temperaturen im Bereich der Selbstentzündungstemperatur sehr viel größer als bei normalen Betriebstemperaturen, deren obere Grenze bei etwa 80° liegt. Überdies tritt an den Bestandteilen einer in Leichtbauweise, insbesondere aus Aluminium oder Aluminiumlegierungen, hergestellten Vorrichtung bei Erwärmung auf die Selbstentzündungstemperatur des Gasgenerators, beispielsweise etwa 180°C, bereits eine erhebliche Verminderung der mechanischen Festigkeit auf. Besondere Schwachstellen sind Schraubverbindungen, die bei normalen Betriebstemperaturen aber die an sie gestellten Forderungen hinsichtlich der mechanischen Festigkeit durchaus erfüllen.

Der Erfindung liegt die Aufgabe zugrunde, eine Antriebsvorrichtung der eingangs angegebenen Art dahingehend weiterzubilden, daß bei einer grundlegenden Konstruktion und Dimensionierung, die gegenüber einer für mäßige Betriebstemperaturen ausgelegten Ausführung unverändert ist, jede Gefährdung durch berstende oder herumfliegende Teile auch dann ausgeschlossen ist, wenn die Vorrichtung bis auf die Selbstentzündungstempe ratur des Gasgenerators erhitzt wird.

Diese Aufgabe wird bei einer gattungsgemäßen Antriebsvorrichtung erfindungsgemäß dadurch gelöst, daß die Arbeitskammer einen nach außen führenden Entlastungsweg aufweist, der durch ein Verschlußelement aus einem Material verschlossen ist, daß bei einer oberhalb des Betriebstemperaturbereichs des Gasgenerators liegenden Temperatur, die höchstens gleich der Selbstentzündungstemperatur des Gasgenerators ist, zumindest in solchem Maße erweicht, daß das Verschlußelement bei Zündung des Gasgenerators den Entlastungsweg freigibt, bei Temperaturen innerhalb des Betriebstemperaturbereichs des Gasgenerators jedoch eine solche mechanische Festigkeit aufweist, daß der Entlastungsweg durch das Verschlußelement bei Gasbeaufschlagung verschlossen bleibt. Durch diese erfindungsgemäße Ausbildung der Antriebsvorrichtung ist gewährleistet, daß bei einer Selbstentzündung des Gasgenerators, beispielsweise aufgrund eines Brandes des Kraftfahrzeugs, die dann unter besonders hohem Druck erzeugten Gase größtenteils über den Entlastungsweg entweichen können. Eine Beaufschlagung der Arbeitskammer mit extrem hohem Gasdruck wird daher vermieden. Es müssen also an die mechanische Festigkeit der Arbeitskammer keine erhöhten Forderungen gestellt werden, so daß die angestrebte Leichtbauweise nicht durch die Forderung ausgeschlossen wird, daß auch bei einer Selbstentzündung des Gasgenerators keine Gefährdung von der Antriebsvorrichtung ausgehen soll. Solange die Erwärmung der Antriebsvorrichtung innerhalb der Grenzen des normalen Betriebstemperaturbereichs bleibt, beispielsweise bei maximal 80°C, bleibt der Entlastungskanal jedoch durch das Verschlußelement sicher verschlossen, so daß die Funktion der Antriebsvorrichtung nicht beeinträchtigt wird.

Wenn die obere Grenze des Betriebstemperaturbereichs des Gasgenerators bei etwa 80°C liegt, so sollte die Erweichungstemperatur des Materials, aus dem das Verschlußelement besteht, bei etwa 120°C bis 130°C liegen; allgemein gilt, daß zwischen der Erweichungstemperatur des Materials, aus dem das Verschlußelement besteht, und der Selbstentzündungstemperatur des Gasgenerators annähernd dieselbe oder etwas größere Temperaturdifferenz bestehen soll wie zwischen Erweichungstemperatur und der oberen Grenze des Betriebstemperaturbereichs des Gasgenerators. Auf diese Weise wird erreicht, daß einerseits innerhalb des normalen Betriebstemperaturbereiches das Verschlußelement noch nicht an Festigkeit einbüßt, andererseits aber bei Erreichen der Selbstentzündungstemperatur die Erweichung des Verschlußelementes bereits soweit fortgeschritten ist, daß eine Freigabe des Entlastungskanals mit hoher Sicherheit gewährleistet ist.

Das Verschlußelement ist vorzugsweise formschlüssig in einem den Entlastungsweg bildenden Kanal aufgenommen. Eine besonders hohe Belastbarkeit des Verschlußelementes ergibt sich, wenn dieses eine der Gasbeaufschlagung zugewandte, verbreiterte Basisfläche aufweist, also insbesondere kegelstumpfförmig ausgebildet ist, und sein Festsitz in dem Kanal unter der Einwirkung der Gasbeaufschlagung durch Keilwirkung gefördert wird. Das Verschlußelement bildet dann einen eine nach außen führende Öffnung der Arbeitskammer verschließenden Stopfen. Dieser Stopfen kann auch durch Ausgießen der Öffnung gebildet sein, wodurch die Herstellung vereinfacht wird.

Mit besonderem Vorteil ist die Erfindung auf den Linearantrieb einer Sicherheitsgurt-Rückstrammeinrichtung anwendbar, deren Arbeitskammer durch einen Zylinder gebildet ist, in der ein Kolben durch Druckbeaufschlagung einer seiner Stirnflächen gleitverschiebbar ist. Der Zylinder kann dann aus Aluminium bestehen und mit dem den Gasgenerator aufnehmenden Sockel verschraubt sein, obwohl eine solche Konstruktion unter Umständen nicht den extrem hohen Belastungen gewachsen ist, die bei einer Selbstentzündung des Gasgenerators aufgrund übermäßiger Erhitzung der Vorrichtung auftreten würden, wenn kein Entlastungsweg vorhanden wäre.

Bei einer solchen Anwendung kann der Entlastungsweg zwischen der Innenwandung des Zylinders und den Kolben gebildet sein, insbesondere in Form eines die Mantelfläche des Kolbens umgebenden Ringes, der formschlüssig mit dem Kolben verbunden ist. Eine solche Ausführungsform erfordert nur geringe Änderungen einer bestehenden Konstruktion zur Ausstattung derselben mit dem erfindungsgemäß vorgesehenen Entlastungsweg.

Eine gleichfalls mit geringem Aufwand durchführbare Änderung einer bestehenden Konstruktion ist bei Ausführungen möglich, bei welchen den Zylinder mit dem Gasgenerator uber einen abgewinkelten Kanal verbunden ist. Der Entlastungsweg wird dann als mittels des Verschlußelements verschlossene Bohrung in der Verlängerung eines der abgewinkelten Zweige des Kanals ausgebildet.

Das Material, aus dem das Verschlußelement gebildet wird, kann metallisch oder synthetisch sein. Besonders zweckmäßig sind eutektische Legierungen, insbesondere eine Legierung aus 55,5 Gew.-% Bi und 44,5 Gew.-% Pb. Die Schmelztemperatur einer solchen eutektischen Legierung liegt bei 124°C.

Besonders geeignete Kunststoffe sind solche, die bis zu ihrer Erweichung eine hohe mechanische Festigkeit bewahren, was insbesondere für Polypropylen zutrifft, dessen Erweichungstemperatur bei etwa 130°C oder etwas höher liegt.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: einen schematischen Längsschnitt einer Ausführungs form, bei welcher die Antriebsvorrichtung einen Kolben/Zylinder-Antrieb für eine Sicherheitsgurt-Rückstrammeinrichtung bildet;
- Fig. 2: eine Variante dieser Ausführungsform;
- Fig. 3: ein Verschlußelement und die zur Aufnahme desselben bestimmte Öffnung vor der Montage des Verschlußelementes; und
- Fig. 4: dasselbe Verschlußelement und dieselbe Öffnung nach Montage des Verschlußelements.

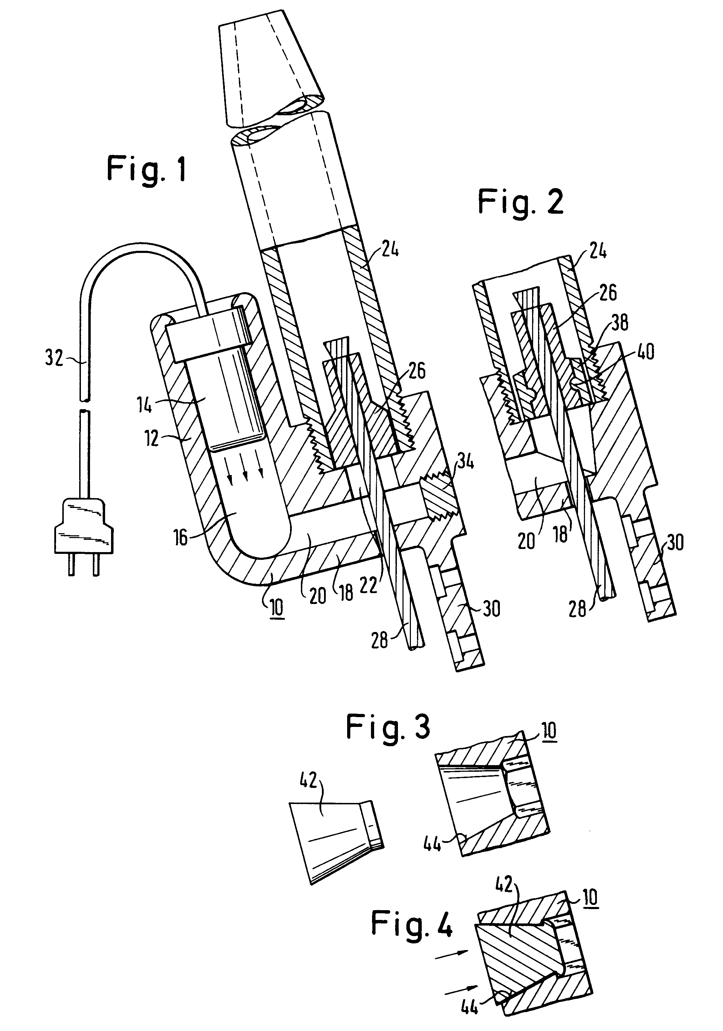

Die in Figur 1 gezeigte Antriebsvorrichtung für eine Sicherheitsgurt-Rückstrammeinrichtung umfaßt ein allgemein L-förmiges Gehäuse 10, in dessen einem Schenkel 12 eine Aufnahmebohrung für einen pyrotechnischen Gasgenerator 14 gebildet ist, welche sich in einem Kanal 16 bis zu dem anderen, rechtwinklig abgebogenen Schenkel 18 fortsetzt und in einen darin gebildeten Kanal 20 übergeht. In diesen Kanal 20 mündet ein Kanal 22, der parallel zu dem Kanal 16 verläuft und in den Innenraum eines Zylinders 24 übergeht. Dieser Innenraum des Zylinders 24 bildet eine Arbeitskammer, in der ein Kolben 26 gleitverschiebbar aufgenommen ist. In dem Kolben 26 ist das Ende eines Zugseiles 28 befestigt. Dieses Zugseil 28 greift am Umfang einer Seilscheibe an, welche die Linearbewegung des Kolbens 26 in eine Drehbewegung umsetzt, die zur Rückstrammung des Gurtbandes auf die Gurtspule eines Gurtaufrollers übertragen wird. Das Gehäuse 10 ist mit einem Befestigungsflansch 30 ausgestattet.

Der Gasgenerator 14 besitzt einen elektrischen Zünder, der über ein Anschlußkabel 32 an eine Auslöseelektronik angeschlossen ist.

Sowohl das Gehäuse 10 als auch der Zylinder 24 sind aus einem leichten Material minderer Festigkeit, insbesondere Aluminium, gefertigt. Die Befestigung des Zylinders 24 am Gehäuse 10 erfolgt durch eine Gewindeverbindung, indem das mit Außengewinde versehene Ende des Zylinders 24 in eine mit Innengewinde versehene Erweiterung des Kanals 22 eingeschraubt ist.

Bei normalem Betrieb der Antriebsvorrichtung wird der pyrotechnische Gasgenerator 14 mittels seines elektrischen Zünders durch Anlegen eines Auslöseimpulses über das Kabel 32 gezündet, woraufhin unter hohem Druck erzeugte Gase über die Kanäle 16, 18, 20 und 22 die Stirnfläche des Kolbens 26 beaufschlagen und diesen in der Arbeitskammer innerhalb des Zylinders 24 vortreiben, bis dieser in einer Verengung am Ende des Zylinders 24 abgebremst wird.

Zur Vermeidung jeglicher Gefährdung durch berstende oder herumfliegende Teile bei einer übermäßigen Erhitzung der Vorrichtung, bei welcher der Gasgenerator 14 seine Selbstentzündungs temperatur erreicht, ist die Vorrichtung mit einem Entlastungsweg ausgestattet, der aber erst dann freigegeben wird, wenn eine Temperatur erreicht ist, die deutlich oberhalb der Grenze des normalen Betriebstemperaturbereiches liegt. Dieser Entlastungsweg ist durch eine Verlängerung des Kanals 20 gebildet. Diese Verlängerung des Kanals 20 bildet eine Öffnung in dem Gehäuse 10, welche durch ein Verschlußelement 34 verschlossen ist. Das Verschlußelement 34 sitzt formschlüssig in dem Ende des Kanals 20. Bei der gezeigten Ausführungsform ist der Formschluß durch ein Außengewinde des Verschlußelements 34 erreicht, welches in ein entsprechendes Innengewinde an der Ausmündung des Kanals eingeschraubt ist. Das Verschlußelement 34 besteht aus einem Material, welches bei einer Erwärmung auf Temperaturen innerhalb des Betriebstemperaturbereiches der Vorrichtung, beispielsweise bis 80°C, eine ausreichende mechanische Festigkeit aufweist, um dem Gasdruck bei normaler Funktion des Gasgenerators 14 standzuhalten. Andererseits weist das Material, aus dem das Verschlußelement 34 besteht, einen Schmelz- oder Erweichungspunkt auf, der unterhalb der Selbstentzündungstemperatur des Gasgenerators 14 liegt, beispielsweise bei etwa 120 bis 140°C, wenn die Selbstentzündungstempe ratur bei etwa 180°C liegt.

Ein geeignetes Material für das Verschlußelement 34 ist eine eutektische Legierung aus 55,5 Gew.-% Bi und 44,5 Gew.-% Pb. Diese Legierung weist einen Schmelzpunkt von etwa 124°C auf.

Geeignet sind aber auch Kunststoffe, die einen Erweichungspunkt im Bereich von etwa 120° bis 150°C aufweisen. Besonders geeignet ist Polypropylen mit einem Schmelzpunkt von etwa 130° bis 150°C.

Bei der in Figur 2 gezeigten Ausführungsform ist das Verschlußelement des Entlastungskanals durch einen Ring 38 gebildet, der die Mantelfläche des Kolbens 26 umgibt und mit diesem durch eine angeformte Rippe 40 formschlüssig verbunden ist. Der das Verschlußelement 38 bildende Ring ist somit zwischen dem Kolben 26 und der Innenoberfläche des Zylinders 24 angeordnet.

Bei der in den Figuren 3 und 4 gezeigten Ausführungsform bildet das Verschlußelement 42 einen kegelstumpfförmigen Stopfen, der in eine entsprechend geformte Öffnung 44 des Gehäuses 10 so eingesetzt wird, daß seine große Basisfläche dem Innenraum des Gehäuses 10 zugewandt ist. Nach dem Einsetzen des Verschlußelements 42 in die Öffnung 44 wird ein Festsitz durch Verstemmen des verjüngten Endes des kegelstumpfförmigen Verschlußelementes 42 hergestellt; dieser Zustand ist in Figur 4 dargestellt.

Die Verschlußelemente 38 und 42 können aus demselben Material gefertigt werden wie das Verschlußelement 34. Eine einfache Herstellung des stopfenförmigen Verschlußelementes 34 oder 42 wird erreicht, indem die Aufnahmeöffnung für dieses Verschlußelement durch Ausgießen verschlossen wird, insbesondere mittels einer eutektischen Legierung.

## Patentansprüche

1. Antriebsvorrichtung für Rückhaltesysteme in Fahrzeugen, mit einem pyrotechnischen Gasgenerator, dessen Gase eine Arbeitskammer beaufschlagen, dadurch gekennzeichnet, daß die Arbeitskammer einen nach außen führenden Entlastungsweg aufweist, der durch ein Verschlußelement (34, 38, 42) aus einem Material verschlossen ist, das bei einer oberhalb des Betriebstemperaturbereichs des Gasgenerators liegenden Temperatur, die höchstens gleich der Selbstentzündungstemperatur des Gasgenerators (14) ist, zumindest in solchem Maße erweicht, daß das Verschlußelement (34, 38, 42) bei Zündung des Gasgenerators (14) den Entlastungsweg freigibt, bei Temperaturen innerhalb des Betriebstemperaturbereichs des Gasgenerators jedoch eine solche mechanische Festigkeit aufweist, daß der Entlastungsweg durch das Verschlußelement bei Gasbeaufschlagung verschlossen bleibt.

2. Antriebsvorrichtung nach Anspruch 1, dadurch gekennzeichnet, daß zwischen der Erweichungstemperatur des Materials, aus dem das Verschlußelement (34, 38, 42) besteht, und der Selbstentzündungstemperatur des Gasgenerators (14) annähernd dieselbe oder etwas größere Temperaturdifferenz besteht wie zwischen Erweichungstemperatur und der oberen Grenze des Betriebstemperaturbereichs des Gasgenerators.

3. Antriebsvorrichtung nach Anspruch 1, bei welcher die obere Grenze des Betriebstemperaturbereichs des Gasgenerators (14) bei etwa 80°C liegt, dadurch gekennzeichnet, daß die Erweichungstemperatur des Materials, aus dem das Verschlußelement (34, 38, 42) besteht, bei etwa 120°C bis 130°C liegt.

4. Antriebsvorrichtung nach einem der vorstehenden Ansprüche, dadurch gekennzeichnet, daß das Verschlußelement (34, 42) formschlüssig in einem den Entlastungsweg bildenden Kanal (20, 44) aufgenommen ist.

5. Antriebsvorrichtung nach Anspruch 4, dadurch gekennzeichnet, daß das Verschlußelement (42) eine der Gasbeaufschlagung zugewandte, verbreiterte Basisfläche aufweist und ein Festsitz in dem Kanal (44) unter der Einwirkung der Gasbeaufschlagung durch Keilwirkung gefördert wird.

6. Antriebsvorrichtung nach einem der vorstehenden Ansprüche, dadurch gekennzeichnet, daß das Verschlußelement (34, 42) einen eine nach außen führende Öffnung der Arbeitskammer verschließenden Stopfen bildet.

7. Antriebsvorrichtung nach Anspruch 6, dadurch gekennzeichnet, daß der Stopfen (34) durch Ausgießen der Öffnung gebildet ist.

8. Antriebsvorrichtung nach einem der vorstehenden Ansprüche, dadurch gekennzeichnet, daß sie einen Linearantrieb für eine Sicherheitsgurt-Rückstrammeinrichtung bildet, deren Arbeitskammer durch einen Zylinder (24) gebildet ist, in dem ein Kolben (26) durch Druckbeaufschlagung einer seiner Stirnflächen gleitverschiebbar ist.

9. Antriebsvorrichtung nach Anspruch 8, dadurch gekennzeichnet, daß der Entlastungsweg zwischen der Innenwandung des Zylinders (24) und dem Kolben (26) gebildet ist.

10. Antriebsvorrichtung nach Anspruch 9, dadurch gekennzeichnet, daß das Verschlußelement (38) als die Mantelfläche des Kolbens (26) umgebender Ring ausgebildet ist, der formschlüssig mit dem Kolben (26) verbunden ist.

11. Antriebsvorrichtung nach Anspruch 8, bei welcher der Zylinder (24) mit dem Gasgenerator über einen abgewinkelten Kanal (16, 20) verbunden ist, dadurch gekennzeichnet, daß der Entlastungsweg als mittels des Verschlußelementes (34) verschlossene Bohrung in der Verlängerung eines der abgewinkelten Zweige des Kanals (20) ausgebildet ist.

12. Antriebsvorrichtung nach einem der vorstehenden Ansprüche, dadurch gekennzeichnet, daß das Verschlußelement (34, 38) aus einer eutektischen Legierung besteht.

13. Antriebsvorrichtung nach Anspruch 12, dadurch gekennzeichnet, daß die eutektische Legierung aus etwa 55,5 Gew.-% Bi und etwa 44,5 Gew.-% Pb besteht.

14. Antriebsvorrichtung nach einem der Ansprüche 1 bis 11, dadurch gekennzeichnet, daß das Verschlußelement (34, 38, 42) aus einem Kunststoff besteht.

15. Antriebsvorrichtung nach Anspruch 14, dadurch gekennzeichnet, daß der Kunststoff Polypropylen ist.

## Claims

1. Drive device for restraining systems in motor vehicles comprising a pyrotechnical gas generator, the gases of which act on a working chamber, characterized in that the working chamber comprises an outwardly leading relief path which is sealed by a closure element (34, 38, 42) of a material which at a temperature which lies above the operating temperature range of the gas temperature and which is at the most equal to the self-igniting temperature of the gas generator (14) softens at least to such an extent that the closure element (34, 38, 42) on ignition of the gas generator (14) frees the relief path but which at temperatures within the operating temperature range of the gas temperature has a mechanical strength such that the relief path remains sealed by the closure element under the gas action.

2. Drive device according to claim 1, characterized in that between the softening temperature of the material of which the closure element (34, 38, 42) consists and the self-igniting temperature of the gas generator (14) there is approximately the same or a somewhat greater temperature difference as between the softening temperature and the upper limit of the operating temperature range of the gas generator.

3. Drive device according to claim 1 in which the upper limit of the operating temperature range of the gas generator (14) lies at about 80°C, characterized in that the softening temperature of the material of which the closure element (34, 38, 42) consists is about 120°C to 130°C.

4. Drive device according to any one of the preceding claims, characterized in that the closure element (34, 42) is received in form-locking manner in a passage (20, 44) forming the relief path.

5. Drive device according to claim 4, characterized in that the closure element (42) comprises a widened base surface facing the gas action and a firm fit in the passage (44) under the action of the gas is promoted by wedging effect.

6. Drive device according to any one of the preceding claims, characterized in that the closure element (34, 42) forms a plug sealing an outwardly leading opening of the working chamber.

7. Drive device according to claim 6, characterized in that the plug (34) was made by filling the opening by casting.

8. Drive device according to any one of the preceding claims, characterized in that it forms a linear drive for a safety-belt tightening means of which the working chamber is formed by a cylinder (24) in which a piston (26) is slidingly displaceable by pressure action on one of its end faces.

9. Drive device according to claim 8, characterized in that the relief path is formed between the inner wall of the cylinder (24) and the piston (26).

10. Drive device according to claim 9, characterized in that the closure element (38) is formed as ring which encircles the outer surface of the piston (26) and is connected in form-locking manner to the piston (26).

11. Drive device according to claim 8 in which the cylinder (24) is connected to the gas generator via an angled passage (16, 20), characterized in that the relief path is formed as bore, sealed by means of the closure element (34), in the extension of one of the angled branches of the passage (20).

12. Drive device according to any one of the preceding claims, characterized in that the closure element (34, 38) consist of a eutectic alloy.

13. Drive device according to claim 12, characterized in that the eutectic alloy consists of about 55.5% by weight Bi and about 44.5% by weight Pb.

14. Drive device according to any one of claims 1 to 11, characterized in that the closure element (34, 38, 42) consists of a plastic.

15. Drive device according to claim 14, characterized in that the plastic is polypropylene.

## Revendications

1. Dispositif d'entraînement de systèmes de retenue pour véhicules automobiles, comportant un générateur de gaz pyrotechnique dont les gaz sont envoyés à un compartiment de travail, caractérisé en ce que le compartiment de travail comporte une voie de détente menant vers l'extérieur, qui est fermée par un élément d'obturation (34, 38, 42) réalisé dans un matériau qui, à une température supérieure à la plage de température de fonctionnement du générateur de gaz, laquelle est au plus égale à la température d'auto-allumage du générateur de gaz (14), se ramollit au moins dans une mesure telle que l'élément d'obturation (34, 38, 42) libère la voie de détente, lors de l'allumage du générateur de gaz (14), mais qui, aux températures situées dans la plage de température de fonctionnement du générateur de gaz, présente une résistance mécanique telle que la voie de détente reste fermée par l'élément d'obturation, sous l'action des gaz.

2. Dispositif d'entraînement selon la revendication 1, caractérisé en ce qu'entre la température de ramollissement du matériau dans lequel est réalisé l'élément d'obturation (34, 38, 42) et la température d'auto-allumage du générateur de gaz (14), on a à peu près la même différence de température, ou une différence légèrement supérieure, qu'entre la température de ramollissement et la limite supérieure de la plage de température de fonctionnement du générateur de gaz.

3. Dispositif d'entraînement selon la revendication 1, dans lequel la limite supérieure de la plage de température de fonctionnement du générateur de gaz (14) se situe à peu près à 80 °C, caractérisé en ce que la température de ramollissement du matériau dans lequel est réalisé l'élément d'obturation (34, 38, 42) se situe à peu près entre 120 °C et 130 °C.

4. Dispositif d'entraînement selon l'une quelconque des revendications 1 à 3, caractérisé en ce que l'élément d'obturation (34, 42) s'emboîte, par concordance de forme, dans un canal (20, 44) formant la voie de détente.

5. Dispositif d'entraînement selon la revendication 4, caractérisé en ce que l'élément d'obturation (42) présente une surface de base élargie, tournée vers l'arrivée des gaz, et en ce qu'un ajustement serré dans le canal (44) est favorisé par un effet de coin, sous l'action des gaz.

6. Dispositif d'entraînement selon l'une quelconque des revendications 1 à 5, caractérisé en ce que l'élément d'obturation (34, 42) forme un bouchon, fermant une ouverture du compartiment de travail, menant vers l'extérieur.

7. Dispositif d'entraînement selon la revendication 6, caractérisé en ce que le bouchon (34) est formé par scellement de l'ouverture.

8. Dispositif d'entraînement selon l'une quelconque des revendications 1 à 7, caractérisé en ce qu'il forme un entraînement linéaire pour un rétracteur de ceinture de sécurité, dont le compartiment de travail est formé par un cylindre (24) dans lequel coulisse un piston (26), par action d'une pression sur l'une de ses faces frontales.

9. Dispositif d'entraînement selon la revendication 8, caractérisé en ce que la voie de détente est formée entre la paroi intérieure du cylindre (24) et le piston (26).

10. Dispositif d'entraînement selon la revendication 9, caractérisé en ce que l'élément d'obturation (38) est un anneau entourant la surface latérale du piston (26) et est assujetti au piston (26) par concordance de forme.

11. Dispositif d'entraînement selon la revendication 8, dans lequel le cylindre (24) est relié au générateur de gaz par un canal (16, 20) coudé, caractérisé en ce que la voie de détente est un perçage, fermé par l'élément d'obturation (34), pratiqué dans le prolongement de l'une des branches coudées du canal (20).

12. Dispositif d'entraînement selon l'une quelconque des revendications 1 à 11, caractérisé en ce que l'élément d'obturation (34, 38) est réalisé dans un alliage eutectique.

13. Dispositif d'entraînement selon la revendication 12, caractérisé en ce que l'alliage eutectique est composé d'environ 55,5 % en poids de Bi et d'environ 44,5 % en poids de Pb.

14. Dispositif d'entraînement selon l'une quelconque des revendications 1 à 11, caractérisé en ce que l'élément d'obturation (34, 38, 42) est en matière plastique.

15. Dispositif d'entraînement selon la revendication 14, caractérisé en ce que la matière plastique est du polypropylène.
